# FASCICULE DE BREVET EUROPEEN

(11) **EP 2 296 844 B1**
(45) Date de publication et mention de la délivrance du brevet: **15.08.2012**
(21) Numéro de dépôt: 09769448.3
(22) Date de dépôt: 28.05.2009
(51) Int. Cl.: B23K 35/02, B23K 35/28, B32B 15/01, C22C 21/02, F28D 21/00

(54) **BANDES EN ALLIAGE D'ALUMINIUM POUR TUBES D'ÉCHANGEURS THERMIQUES BRASÉS**
ALUMINIUMLEGIERUNGSSTREIFEN FÜR GELÖTETE WÄRMETAUSCHERROHRE
ALUMINUM ALLOY STRIPS FOR BRAZED HEAT EXCHANGER TUBES

(30) Priorité: 02.06.2008 FR 0803018
(43) Date de publication de la demande: 23.03.2011
(73) Titulaire: Constellium France, 75008 Paris (FR)
(72) Inventeur: HENRY, Sylvain, F-38430 Saint Jean de Moirans (FR); PERRIN, Elodie, F-38500 Voiron (FR)
(74) Mandataire: Fénot, Dominique
(86) Numéro de dépôt international: PCT/FR2009/000619
(87) Numéro de publication internationale: WO 2009/156607

(56) Documents cités:
- EP-A- 0 637 481
- EP-A- 1 075 935
- EP-A- 1 413 427
- EP-A- 1 645 830
- WO-A-00/17409
- FR-A- 2 816 046
- FR-A- 2 855 774
- JP-A- 11 315 337
- JP-A- 2004 217 982
- JP-A- 2004 217 983
- JP-A- 2007 127 306
- US-A- 4 196 262
- US-A- 5 744 255
- US-A1- 2006 102 328

## Description

### Domaine de l'invention

L'invention concerne le domaine des bandes en alliage d'aluminium destinées à la fabrication des échangeurs thermiques, notamment ceux utilisés pour le refroidissement des moteurs, le chauffage ou la climatisation de l'habitacle, ou encore pour toute autre fonction d'échange thermique, dans les véhicules automobiles.

Ces dernières, en particulier celles utilisées pour les tubes de radiateurs de refroidissement du moteur ou de radiateurs de chauffage, sont généralement revêtues sur la face externe d'un alliage de brasage et sur la face interne d'un alliage destiné à la protection contre la corrosion et l'érosion par le liquide de refroidissement. L'invention concerne plus particulièrement ces bandes revêtues, qui font partie de ce que l'on appelle les tôles de brasage, utilisées pour les tubes d'échangeurs thermiques, en contact avec le fluide de refroidissement.

### Etat de la technique

Les alliages d'aluminium sont désormais majoritairement utilisés dans la fabrication des échangeurs thermiques pour l'automobile en raison de leur faible densité, qui permet un gain de poids, notamment par rapport aux alliages cuivreux, tout en assurant une bonne conduction thermique, une facilité de mise en oeuvre et une bonne résistance à la corrosion.

Tous les alliages d'aluminium dont il est question dans ce qui suit sont désignés, sauf mention contraire, selon les désignations définies par 1' « Aluminum Association » dans les « Registration Record Series » qu'elle publie régulièrement.

Les échangeurs comportent des tubes pour la circulation du fluide interne de chauffage ou de refroidissement et des ailettes ou intercalaires pour augmenter le transfert thermique entre le fluide interne et le fluide externe, et leur fabrication se fait soit par assemblage mécanique, soit par brasage.

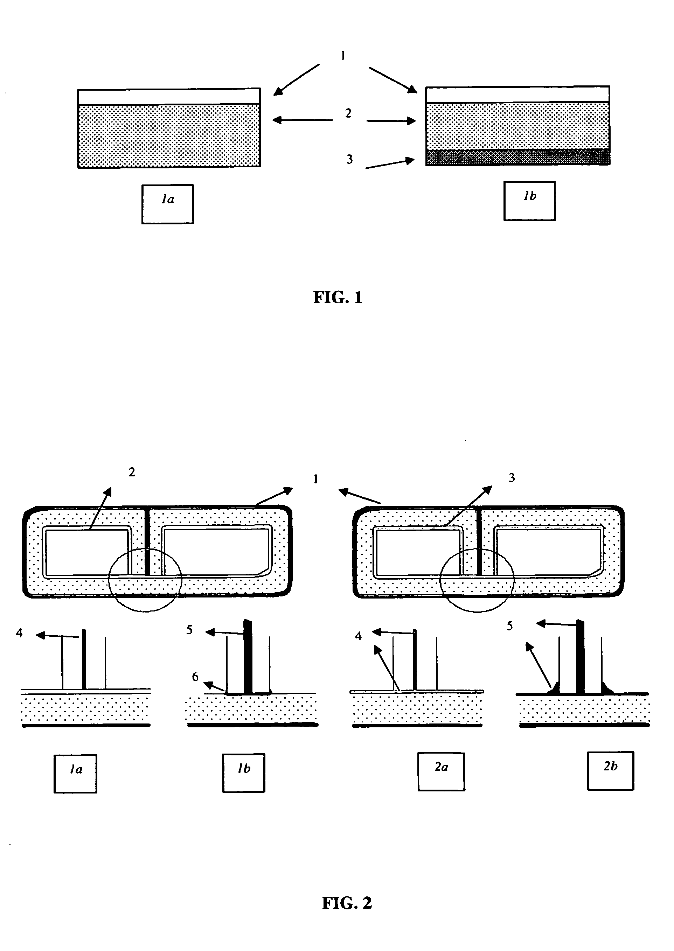

Dans le cas le plus courant de l'assemblage par brasage, la tôle d'âme constituant le tube, généralement en alliage d'aluminium de la série AA3xxx, est revêtue sur la face externe, en contact avec les ailettes, d'un alliage dit de brasage, généralement de la série AA4xxx. Cette configuration est illustrée par la figure 1, schéma 1a, la tôle d'âme portant le repère 2 et l'alliage de brasage le repère 1.

Celui-ci, présente l'intérêt de fondre à une température inférieure à la température de fusion de l'âme et, par application d'un cycle thermique de brasage, de pouvoir créer une liaison entre les deux matériaux à braser, ailettes et extérieur du tube.

La tôle d'âme peut également être revêtue sur sa face interne d'une couche de protection 3 contre la corrosion et l'érosion par le fluide de refroidissement ou caloporteur. Cette configuration est illustrée par la figure 1, schéma 1b.

Cette dernière couche, le plus souvent aussi sous forme de tôle colaminée, est connue dans la profession sous le nom de « inner-liner » ; elle est constituée généralement d'un alliage de la série AA7xxx.

L'alliage de placage interne le plus utilisé à ce jour est du type AA7072.

En effet, du fait de sa teneur relativement importante en zinc, en moyenne 1.05 % en pourcentage pondéral, son potentiel de corrosion est plus faible que celui de l'âme, typiquement en alliage du type Al-Mn-Cu, ce qui lui permet d'assurer son rôle d'anode sacrificielle.

A titre d'exemples d'alliages Al-Mn-Cu d'âme, on citera les alliages 3916 et 3915, décrits respectivement dans le brevet EP 1075935 et la demande EP 1413427 de la demanderesse, et dont compositions précisées ci-dessous en pourcentages pondéraux, hors éléments d'impureté limités à 0,05 % chacun et 0.15 % au total:

| | Si | Fe | Cu | Mn | Mg | Zn | Ti |
|---|---|---|---|---|---|---|---|
| 3916 | 0,15-0,30 | < 0.25 | 0,5-1,0 | 1,0-1,4 | < 0,01 | < 0,2 | < 0,1 |
| 3915 | 0,15-0,30 | < 0.25 | 0,5-1,0 | 1,0-1,4 | 0,10-0,35 | < 0,2 | < 0,1 |

Cependant, du fait de sa température de solidus, du même ordre que celle des alliages d'âme couramment utilisés, soit environ 640°C, l'alliage AA7072 ne participe pas au brasage.

Par ailleurs, pour des raisons d'efficacité de l'échange thermique, se substituent de plus en plus aux tubes simples roulés soudés, des tubes à section dite en B, tels que représentés en figure 2.

Ils sont obtenus par pliage, à partir notamment d'une bande ou tôle de brasage telle que précédemment définie, c'est-à-dire avec un placage de brasage sur sa face externe, et un placage sacrificiel sur sa face interne.

Toutefois, le brasage de ce type de tube est difficile, particulièrement au niveau de l'extérieur du pied 6 tel que représenté à l'intérieur du cercle en figure 2, vue de gauche.

En effet, l'obtention d'un joint de brasage 5 correct dans cette zone nécessite l'apport d'une quantité importante d'alliage de brasage 4 issu du placage 1, alors que le volume extérieur disponible dudit alliage de brasage est limité et situé au seul niveau du centre du pied comme illustré par la figure 2, vue de gauche, au centre du cercle ainsi que sur les schémas *1a* et *1b.*

L'une des solutions connues à ce problème consiste à augmenter l'épaisseur de placage externe 1 pour aboutir à un apport plus important dans la zone 6.

On rappellera que, typiquement, dans le cas d'un tube roulé-soudé qui n'est pas soumis à ce problème, le placage externe correspond à 10% de l'épaisseur totale de la tôle de brasage contre 10% pour le placage interne, pour une épaisseur totale généralement entre 200 et 300 µm.

Dans le cas d'un tube plié-brasé à section en B, pour accroître l'épaisseur de placage externe 1 d'alliage de brasage, il faut soit augmenter l'épaisseur totale de la tôle de brasage en conservant les pourcentages précités, soit augmenter le pourcentage de placage externe à épaisseur constante de la tôle de brasage.

Ces deux solutions ne sont clairement pas satisfaisantes.

La première est tout à fait contraire à la tendance générale dans le domaine automobile, et plus particulièrement dans celui des échangeurs thermiques, qui consiste à réduire au maximum l'épaisseur des composants.

La seconde implique la réduction de l'épaisseur d'âme qui précisément assure majoritairement la tenue mécanique ainsi que la résistance à la corrosion du matériau.

Une autre solution connue consiste à utiliser un alliage de brasage du type AA4045 ou AA4343 pour le placage interne ou « inner-liner ». Mais une telle alternative se traduit inévitablement par une chute inacceptable de la résistance à la corrosion, en particulier telle que mesurée par le test dit « OY » connu de l'homme du métier et décrit plus loin.

Enfin, les demandes JP2005037062 de Toyo Radiator, JP2004217982 et JP2004217983 de Sumitomo Light Metal décrivent des solutions alternatives consistant essentiellement dans des replis de la tôle de brasage dans la zone du centre du pied de manière à réaliser un contact entre deux parties du placage externe et garantir ainsi le brasage.

De telles solutions présentent notamment, tout comme la première décrite, l'inconvénient d'induire un surplus de matière utilisée et un accroissement de l'encombrement global à section interne de circulation de fluide constante.

### Problème posé

L'invention vise à résoudre ces difficultés de brasage sans surplus de matière utilisée ni d'encombrement ou de poids tout en assurant une résistance à la corrosion interne au moins équivalente à celle obtenue dans le cas d'une tôle de brasage de l'art antérieur dont la couche interne est constituée d'un alliage de la série AA7xxx.

### Objet de l'invention

L'invention a pour objet une tôle de brasage constituée d'une tôle d'âme en alliage d'aluminium revêtue sur au moins une face d'une couche de placage formant anode sacrificielle, caractérisée en ce que ladite couche de placage est constituée d'un alliage d'aluminium de composition chimique, exprimée en pourcentages pondéraux:
Si : > 2,0 - 7,0 Fe < 0,5 Cu < 1,0 Mn : 1,0 - 2,0 Mg < 0,5 Zn : 1,0 - 3,0 Cr < 0,25 Ni < 1,5 Ti < 0,25 Co < 1,5 V, In, Sn, Zr, Sc < 0,25 chacun, autres éléments < 0,05 chacun et 0,15 au total.

Selon un mode de réalisation avantageuse, la tôle d'âme est en alliage d'aluminium de la série AA3xxx et de préférence en alliage 3915 ou 3916.

De même, la tôle de brasage est généralement revêtue sur la face externe, soit opposée à la couche de placage formant anode sacrificielle, d'une couche d'alliage d'aluminium de brasage de la série AA4xxx.

Selon un mode de réalisation préférentielle, la ou les différentes couches, de placage, de brasage et tôle d'âme, sont assemblées par colaminage.

Enfin l'invention a également pour objet un tube d'échangeur thermique réalisé par pliage et brasage à partir d'une tôle de brasage telle que décrite ci-dessus et dont la couche de placage formant anode sacrificielle constitue le revêtement intérieur du tube ou « inner-liner ».

### Description des figures

La figure 1 représente, selon le schéma *1a*, une tôle de brasage à deux couches, la tôle d'âme portant le repère 2 et l'alliage de brasage (pouvant être également la couche de placage selon l'invention) le repère 1, et selon le schéma *1b*, une tôle de brasage à trois couches, la tôle d'âme portant le repère 2, l'alliage de brasage le repère 1 et la couche de placage formant anode sacrificielle le repère 3.

La figure 2 représente schématiquement :
A gauche un tube en B obtenu par pliage d'une tôle de brasage constituée d'une tôle d'âme revêtue sur une face dite externe d'un alliage de brasage 1 et sur sa face interne d'un alliage de placage 2 ayant comme unique rôle de protéger l'âme contre la corrosion, mais ne participant pas au brasage.

Le schéma *1a* représente un agrandissement de la zone de centre de pied entourée avec l'alliage de brasage en 4, avant l'opération de brasage.

Le schéma *1b* représente la même zone après brasage, avec en 5 et en noir épais le joint de brasage et en 6 la zone présentant des difficultés de brasage.
A droite, la même schématisation du tube en B, mais selon l'invention, la face interne étant revêtue d'une couche d'alliage de placage 3 protégeant l'âme contre la corrosion par effet d'anode sacrificielle mais participant au brasage.

Sur le schéma *2a*, avant brasage apparaît comme précédemment en 4 l'alliage de brasage du placage externe, mais aussi celui du placage interne, et sur le schéma *2b*, après brasage, le joint de brasage 5 qui couvre également la zone précédemment difficile à braser.

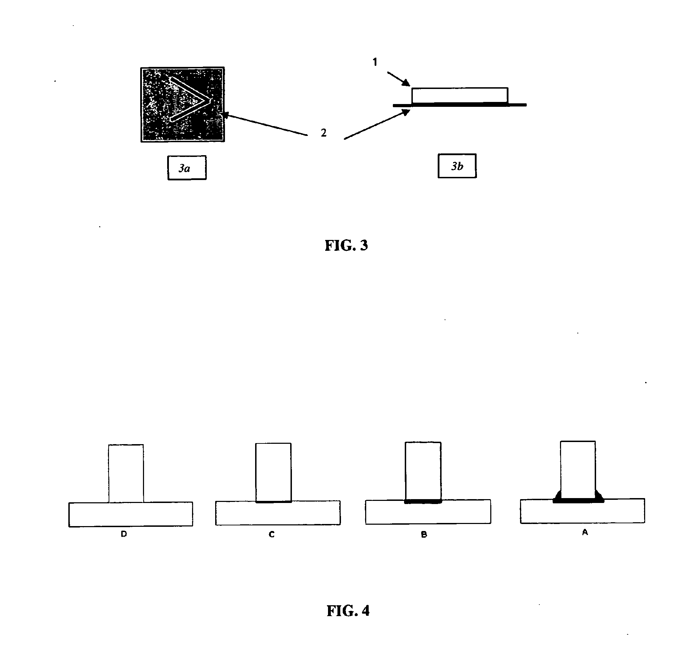

La figure 3 illustre le test dit « en V » utilisé pour évaluer l'aptitude au brasage, avec en *3a* une vue de dessus et en *3b* une vue de côté.

La plaque 2 est constituée du matériau à tester. Le « V » 1 est constitué d'une bande nue en alliage du type AA3xxx, par exemple AA3003.

La figure 4 schématise le mode de classification de A à D de la qualité des joints de brasage réalisés lors du test en V, après coupes perpendiculaires aux plans de branche du « V » et au plan de la plaque puis observation métallographique.

### Description de l'invention

L'invention consiste dans l'utilisation, pour la couche de placage formant anode sacrificielle d'une tôle de brasage, d'un alliage dont la composition est optimisée afin d' atteindre :
- des performances de comportement en corrosion, notamment évaluées par le test dit « OY » connu de l'homme du métier et décrit au chapitre « Exemples », au moins identiques à celles d'une même tôle utilisant pour cette couche un alliage du type AA7072
- une température de fusion de la dite couche autorisant un brasage aisé.

Plus précisément, la famille en question est caractérisée par la composition chimique suivante, exprimée en pourcentages pondéraux:
Si : > 2,0 - 7,0 Fe < 0,5 Cu < 1,0 Mn : 1,0- 2,0 Mg < 0,5 Zn : 1,0 - 3,0 Cr < 0,25 Ni < 1,5 Ti < 0,25 Co < 1,5 V, In, Sn, Zr, Sc < 0,25 chacun, autres éléments < 0,05 chacun et 0,15 au total.

Les plages de concentration imposées aux éléments constitutifs de chaque alliage s'expliquent par les raisons suivantes :
Si constitue l'élément majeur quant à l'influence sur l'aptitude au brasage. Sa teneur doit être strictement supérieure à 2% car jusqu'à cette valeur, l'aptitude au brasage n'est pas satisfaisante; par contre, au delà de 7 %, la protection contre la corrosion par effet d'anode sacrificielle n'est plus suffisante. De préférence, sa teneur est comprise entre 3 et 5 % et encore plus préférentiellement entre 3 et 4 %.
Fe constitue de façon générale une impureté pour l'aluminium ; les phases au fer constituent des sites privilégiés d'initiation de piqûres de corrosion. De ce fait, sa teneur doit être inférieure à 0,5 % et plus préférentiellement à 0,3 %.
Cu a un effet favorable sur la résistance mécanique mais il augmente également le potentiel de corrosion réduisant ainsi l'effet d'anode sacrificielle. Par sa répartition non homogène au sein de l'alliage, il peut également accroître les risques de corrosion galvanique. De ce fait, sa teneur doit être limitée à 1 % et plus préférentiellement à 0,8 %. Dans certains cas, il peut même être souhaitable de limiter la teneur en cuivre à celle d'une impureté, soit 0,05 %, afin d'éviter des phénomènes de dissolution puis re-précipitation du cuivre à la surface.
Mn est un élément durcissant ; il a un effet positif sur la résistance après brasage par durcissement en solution solide et sous forme de fins précipités. En dessous de 1%, le durcissement est insuffisant. Par contre, au-delà de 2 %, il donne lieu à la formation de phases intermétalliques grossières très défavorables à la coulabilité de l'alliage.
Mg a une influence positive sur la résistance mécanique, mais il est néfaste à la brasabilité, dans la mesure où il migre à la surface du placage et, surtout dans le cas du brasage du type Nocolok^{®}, il vient former une couche d'oxyde qui modifie dans un sens défavorable les propriétés de la brasure. Pour cette raison, sa teneur doit être limitée à 0,5 % et mieux, dans le cas du brasage sous flux à 0,3 %. Pour certaines applications difficiles, il peut être nécessaire de réduire sa teneur à celle d'une impureté, soit 0,05 %, voire même, conformément au brevet EP 1075935 B1 de la demanderesse, à 0,01 %.
Zn contribue de façon majeure à l'effet sacrificiel de la couche de placage. En dessous de 1 %, cet effet est insuffisant, et au-delà de 3 %, l'effet est trop marqué pour assurer une protection suffisamment durable. La fourchette préférentielle est de 1,5 à 2,5%.
Ni et Co peuvent être ajoutés jusqu'à une teneur de 1,5 % pour améliorer les caractéristiques mécaniques de l'alliage ainsi que sa résistance à la corrosion, en particulier en milieu basique (pH supérieur à 9).
Ti peut être ajouté jusqu'à une teneur de 0.25 % pour améliorer le comportement en corrosion de l'alliage. Le titane se concentre sur des couches parallèles à la direction de laminage, ce qui favorise une corrosion latérale plutôt qu'une corrosion par piqûres pénétrantes.
Cr, V, Zr et Sc sont des éléments anti-recristallisants qui améliorent notamment la résistance mécanique après brasage, mais agissent également de manière favorable sur la résistance à la corrosion. Leur addition est possible jusqu'à une teneur de 0.25 % chacun.
Enfin In et Sn ont un effet sacrificiel analogue à celui du Zn et peuvent être ajoutés jusqu'à une teneur de 0,25 % chacun.

Dans ses détails, l'invention sera mieux comprise à l'aide des exemples ci-après, qui n'ont toutefois pas de caractère limitatif.

### Exemples

On a coulé plusieurs plaques d'alliage d'âme 3916 (selon le brevet EP 1075935 précité) et d'alliage de brasage AA4045 ainsi que sept plaques d'alliage de placage pour anode sacrificielle et une plaque d'alliage AA7072 utilisé comme référence.

La composition des six alliages de placage 1 à 6 selon l'invention ainsi que d'un alliage 7, à teneur en Si de 2,0 %, hors invention, est indiquée au tableau 1 ci-après.

**Tableau 1**

| **Alliage** | **Si** | **Fe** | **Cu** | **Mn** | **Zn** |
|---|---|---|---|---|---|
| **1** | 2,5 | 0,15 | - | 1,15 | 1,4 |
| **2** | 3 | 0,15 | - | 1,15 | 1,4 |
| **3** | 3,5 | 0,15 | - | 1,15 | 1,4 |
| **4** | 2,5 | 0,15 | 0,4 | 1,15 | 1,6 |
| **5** | 3,5 | 0,15 | 0,4 | 1,15 | 1,6 |
| **6** | 2,5 | 0,15 | 0,65 | 1,35 | 1,8 |
| **7** | 2,0 | 0,15 | - | 1,15 | 1,4 |

Des assemblages ont été réalisés à partir de ces plaques de telle sorte que chaque épaisseur d'alliage de brasage sur une face et d'alliage de placage sur l'autre face de la plaque d'âme en alliage 3916 représente 10% de l'épaisseur totale.

Des assemblages ont également été réalisés de la même façon avec, sur chaque face, l'alliage de brasage AA4045.

Ces assemblages ont été laminés à chaud, puis à froid de façon à produire des bandes plaquées d'épaisseur 0.25 mm. Ces bandes ont ensuite été soumises à un traitement de restauration de 2 h à 280°C après montée en température à une vitesse de 45°C/min.

L'éprouvette décrite à la figure 3 a été utilisée pour évaluer l'aptitude au brasage de ces matériaux.

Le « V » est constitué d'une bande nue en alliage 3003, à l'état H24, et d'épaisseur 0.3 mm. Un traitement de dégraissage de 15 min à 250°C est appliqué au métal à braser. Un flux Nocolok^{®} est ensuite déposé sur la tôle 2 de métal à braser. Le brasage se fait dans un four en verre à double paroi qui permet de visualiser les mouvements de brasure liquide et la formation des joints au cours du traitement. Le cycle thermique est composé d'une phase de montée en température jusqu'à 600°C avec une vitesse d'environ 20°C/min, d'un maintien de 2 min à 600°C, et d'une descente à environ 30°C/min. Le tout se fait sous balayage continu d'azote, avec un débit de 8 1/min.

Les résultats sont tout d'abord qualifiés par une note de A à E attribuée en fonction d'un examen par contrôle visuel selon l'échelle suivante :

| **Note attribuée** | **A** | **B** | **C** | **D** | **E** |
|---|---|---|---|---|---|
| **Longueur de joint formée par rapport à la longueur totale du V** | 100% | 90% | 75% | 50% | 0% |

Les résultats obtenus sont indiqués au tableau 2, les essais ayant été répétés quatre fois pour chaque alliage de placage.

**Tableau 2**

| **Alliage** | **4045** | **7072** | **1** | **2** | **3** | **4** | **5** | **6** | **7** |
|---|---|---|---|---|---|---|---|---|---|
| **Cotation des joints** | A | E | A | A | A | A | A | A | D |

Des examens métallographiques des joints de brasage réalisés lors du test en V ont également été effectués après coupes perpendiculaires aux plans de branche du « V » et au plan de la plaque et la qualité des joints a été classifiée selon l'échelle telle qu'illustrée en figure 4.

Les résultats obtenus sont indiqués au tableau 3 ci-après:

**Tableau 3**

| **Alliage** | **4045** | **7072** | **1** | **2** | **3** | **4** | **5** | **6** | **7** |
|---|---|---|---|---|---|---|---|---|---|
| **Cotation des joints** | A | D | C | B | A | B | A | C | D |

Il ressort de ces essais que les alliages 3 et 5, à teneur en Si de 3,5 %, présentent les joints de brasage les plus épais, suivis des alliages 2 et 4, pour une teneur de 3 et 2,5 %, et enfin 1 et 6, pour une teneur de 2,5 %.

Pour tous ces cas, l'aptitude au brasage apparaît comme meilleure que celle de l'alliage de référence AA7072. L'alliage 7, à teneur en Si de 2,0%, n'apporte pas d'amélioration suffisamment significative par rapport au cas de référence.

Bien évidemment, dans le cas du placage en alliage 4045 sur les deux faces, l'aptitude au brasage est excellente.

La résistance à la corrosion interne, soit côté couche de placage formant anode sacrificielle, a également été évaluée au moyen d'un test de corrosion en solution dite « OY ».

Le test réalisé consiste à maintenir, pendant 3 jours à 88°C, un échantillon de la tôle de brasage, typiquement de dimensions 60 x 100 mm, en protégeant la face non examinée, dans une solution liquide contenant de nombreuses espèces ioniques (sulfates, chlorures, ferriques, cupriques).

Les concentrations ioniques de cette solution sont précisées au tableau 4 ci-après:

**Tableau 4**

| **Ion** | **Concentration en ppm** | **Sels utilisés** | **Masse introduite en mg** |
|---|---|---|---|
| **Cl⁻** | 195 | NaCl | 2272.7 |
| **SO4²⁻** | 60 | Na₂SO₄, 10H₂O | 1961.7 |
| **Fe³⁺** | 30 | FeCl₃, 6H₂O | 1452 |
| **Cu²⁺** | 1 | CuSO₄, 5H₂O | 39.9 |

La résistance à la corrosion est quantifiée par des mesures de profondeur de piqûres par une technique de focalisation différentielle en microscopie optique et qualifiée par des observations métallographiques en coupe.

Les résultats présentés au tableau 5 ci-après correspondent à la moyenne des 7 piqûres les plus profondes.

**Tableau 5**

| **Alliage** | **4045** | **7072** | **1** | **2** | **3** | **4** | **5** | **6** | **7** |
|---|---|---|---|---|---|---|---|---|---|
| **Profondeur moyenne (µm)** | 122 | 86 | 85 | 87 | 92 | 81 | 85 | 77 | 86 |

Les profondeurs de piqures relevées, pour les six alliages selon l'invention ainsi que l'alliage 7, sont du même ordre que celles mesurées dans le cas de l'alliage de référence AA7072.

Les coupes métallographiques réalisées sur ces échantillons après test « OY » montrent que le mode de corrosion des tôles selon l'invention est le même que celui des tôles de référence plaquées d'alliage AA7072, c'est-à-dire latéralisé, et que la profondeur maximum de piqûres est comparable.

Dans le cas du placage en alliage 4045 sur les deux faces, la profondeur moyenne de piqûre est de 122 µm, soit de 50% plus importante que pour la référence 7072 et les alliages selon l'invention.

Le comportement en corrosion des tôles selon l'invention est donc au moins équivalent à celui d'une tôle de brasage de l'art antérieur dont la couche interne est constituée d'un alliage de la série AA7072, alliage de placage interne le plus couramment utilisé.

Par contre, conformément au but recherché, ces tôles sont parfaitement aptes au brasage également sur la couche de placage formant anode sacrificielle selon l'invention.

## Revendications

1. Tôle de brasage constituée d'une tôle d'âme en alliage d'aluminium revêtue sur au moins une face d'une couche de placage formant anode sacrificielle, **caractérisée en ce que** ladite couche de placage est constituée d'un alliage d'aluminium de composition chimique, exprimée en pourcentages pondéraux :
Si: 2,0 - 7,0 Fe < 0,5 Cu < 1,0 Mn : 1,0 - 2,0 Mg < 0,5 Zn : 1,0 - 3,0 Cr < 0,25 Ni < 1,5 Ti < 0,25 Co < 1,5 V, In, Sn, Zr, Sc < 0,25 chacun, autres éléments < 0,05 chacun et 0,15 au total.

2. Tôle de brasage selon la revendication 1, **caractérisée en ce que** la teneur en Si de la couche de placage est comprise entre 3,0 et 5,0 %.

3. Tôle de brasage selon la revendication 2, **caractérisée en ce que** la teneur en Si de la couche de placage est comprise entre 3,0 et 4,0 %.

4. Tôle de brasage selon l'une des revendications 1 à 3, **caractérisée en ce que** la teneur en Fe de la couche de placage est inférieure à 0,3 %.

5. Tôle de brasage selon l'une des revendications 1 à 4, **caractérisée en ce que** la teneur en Cu de la couche de placage est inférieure à 0,8 %.

6. Tôle de brasage selon l'une des revendications 1 à 5, **caractérisée en ce que** la teneur en Cu de la couche de placage est inférieure a 0,05 %.

7. Tôle de brasage selon l'une des revendications 1 à 6, **caractérisée en ce que** la teneur en Mg de la couche de placage est inférieure à 0,3 %.

8. Tôle de brasage selon l'une des revendications 1 à 7, **caractérisée en ce que** la teneur en Mg de la couche de placage est inférieure à 0,05 %.

9. Tôle de brasage selon l'une des revendications 1 à 8, **caractérisée en ce que** la teneur en Mg de la couche de placage est inférieure à 0,01 %.

10. Tôle de brasage selon l'une des revendications 1 à 9, **caractérisée en ce que** la teneur en Zn de la couche de placage est comprise entre 1,5 et 2,5 %.

11. Tôle de brasage selon l'une des revendications 1 à 10, **caractérisée en ce que** la couche de placage est appliquée sur une face de la tôle d'âme en alliage d'aluminium de la série AA3xxx.

12. Tôle de brasage selon la revendication 11, **caractérisée en ce que** la couche de placage est appliquée sur une face de la tôle d'âme en alliage 3915.

13. Tôle de brasage selon la revendication 11, caractérisée en cc que la couche de placage est appliquée sur une face de la tôle d'âme en alliage 3916.

14. Tôle de brasage selon l'une des revendications 11 à 13 **caractérisée en ce que** l'autre face de la tôle d'âme est revêtue d'une couche d'alliage d'aluminium de brasage de la série AA4xxx.

15. Tube d'échangeur thermique réalisé par pliage et brasage à partir d'une tôle de brasage selon l'une des revendications 1 à 14 **caractérisé en ce que** la couche de placage formant anode sacrificielle constitue le revêtement intérieur du tube ou « inner-liner ».

## Claims

1. A brazing sheet formed from an aluminium alloy web metal sheet coated on at least one surface with a plating layer forming a sacrificial anode, **characterised in that** said plating layer is formed from an aluminium alloy with a chemical com position expressed in percentage by weight:
Si:>2.0-7.0 Fe<0.5 Cu<1.0 Mn:1.0-2.0 Mg<0.5 Zn:1.0-3.0 Cr<0.25 Ni<1.5 Ti<0.25 Co<1.5 V,In,Sn,Zr,Sc<0.25
each, other elements <0.05 each and 0.15 in total.

2. The brazing sheet according to claim 1, characteris ed in that the Si content of the plating layer is included between 3.0 and 5.0 %.

3. The brazing sheet according to claim 2, **characterised in that** the Si content of the plating layer is included between 3.0 and 4.0 %.

4. The brazing sheet according to one of the claims 1 to 3, **characterised in that** the Fe content of the plating layer is lower than 0.3 %.

5. The brazing sheet according to one of the claims 1 to 4, **characterised in that** the Cu content of the plating layer is lower than 0.8 %.

6. The brazing sheet according to one of the claims 1 to 5, **characterised in that** the Cu content of the plating layer is lower than 0.05 %.

7. The brazing sheet according to one of the claims 1 to 6, **characterised in that** the Mg content of the plating layer is lower than 0.3 %.

8. The brazing sheet according to one of the claims 1 to 7, **characterised in that** the Mg content of the plating layer is lower than 0.05 %.

9. The brazing sheet according to one of the claims 1 to 8, **characterised in that** the Mg content of the plating layer is lower than 0.01 %.

10. The brazing sheet according to one of the claims 1 to 9, **characterised in that** the Zn content of the plating layer is included between 1.5 and 2.5 %.

11. The brazing sheet according to one of the claims 1 to 10, **characterised in that** the plating layer is applied to one surface of the series AA3xxx aluminium alloy web metal sheet.

12. The brazing sheet according to claim 11, **characterised in that** the plating layer is applied to a surface of the 3915 alloy web metal sheet.

13. The brazing sheet according to claim 11, **characterised in that** the plating layer is applied to a surface of the 3916 alloy web metal sheet.

14. The brazing sheet according to one of the claims 11 to 13, **characterised in that** the other surface of the web metal sheet is coated with a layer of series AA4xxx brazing aluminium alloy.

15. A heat exchanger tube produced by plating and brazing from a brazing sheet according to one of the claims 1 to 14, **characterised in that** the plating layer forming a sacrificial anode constitutes the internal coating of the tube or the inner liner.

## Patentansprüche

1. Lötblech, gebildet aus einem Kernblech, das aus einer Aluminiumlegierung besteht, das auf mindestens einer Seite mit einer Plattierungsschicht, die eine Opfer - anode bildet, beschichtet ist, **dadurch gekennzeichnet, dass** die Plattierungsschich t aus einer Aluminiumle - gierung mit einer chemischen Zusammensetzung gebildet wird, ausgedrückt in Gewichtsprozent:
Si: >2,0 - 7,0 Fe < 0,5 Cu < 1,0 Mn: 1,0 - 2,0 Mg <0,5 Zn: 1,0 - 3,0 Cr <0,25 Ni <1,5 Ti <0,25 Co <1,5 V, In, Sn, Zr, Sc jeweils <0,25, and ere Elemente jeweils <0,05 und 0,15 insgesamt.

2. Lötblech nach Anspruch 1, **dadurch gekennzeichnet, dass** der Gehalt an Si der Plattierungsschicht im Bereich zwischen 3,0 und 5,0 % liegt.

3. Lötblech nach Anspruch 2, **dadurch gekennzeichnet, dass** der Si-Gehalt der Plattierungsschicht im Bereich zwi - schen 3,0 und 4,0 % liegt.

4. Lötblech nach einem der Ansprüche 1 bis 3, **dadurch gekennzeichnet, dass** der Fe -Gehalt der Plattierungs - schicht kleiner als 0,3 % ist.

5. Lötblech nach einem der Ansprüche 1 bis 4, **dadurch gekennzeichnet, dass** der Cu -Gehalt der Plattierungs - schicht kleiner als 0,8 % ist.

6. Lötblech nach einem der Ansprüche 1 bis 5, **dadurch gekennzeichnet, dass** der Cu -Gehalt der Plattierungs - schicht kleiner als 0,05 % ist.

7. Lötblech nach einem der Ansprüche 1 bis 6, **dadurch gekennzeichnet, dass** der Mg -Gehalt der Plattierungs - schicht kleiner als 0,3 % ist.

8. Lötblech nach einem der Ansprüche 1 bis 7, **dadurch gekennzeichnet, dass** der Mg -Gehalt der Plattierungs - schicht kleiner als 0,05 % ist.

9. Lötblech nach einem der Ansprüche 1 bis 8, **dadurch gekennzeichnet, dass** der Mg -Gehalt der Plattierungs - schicht kleiner als 0,01 % ist.

10. Lötblech nach einem der Ansprüche 1 bis 9, **dadurch gekennzeichnet, dass** der Zn -Gehalt der Plattierungs - schicht im Bereich zwischen 1,5 und 2,5 % liegt.

11. Lötblech nach einem der Ansprüche 1 bis 10, **dadurch gekennzeichnet, dass** die Plattierungsschicht auf einer Seite des Kernblechs, das aus einer Aluminiumlegierung der Serie AA3xxx besteht, aufgebracht wird.

12. Lötblech nach Anspruch 11, **dadurch gekennzeichnet, dass** die Plattierungsschicht auf einer Seite des Kernblechs, das aus Legierung 3915 besteht, aufgebracht wird.

13. Lötblech nach Anspruch 11, **dadurch gekennzeichnet, dass** die Plattierungsschicht auf einer Seite des Kernblechs, das aus Legierung 3916 besteht, aufgebracht wird.

14. Lötblech nach einem der Ansprüche 11 bis 13, **dadurch gekennzeichnet, dass** die andere Seite des Kernblechs mit einer Lötschicht aus Aluminiumlegierung der Serie AA4xxx beschichtet ist.

15. Wärmetauscherrohr, hergestellt mittels Biegen und Löten aus einem Lötblech nach einem der Ansprüche 1 bis 14, **dadurch gekennzeichnet, dass** die Plattierungsschicht, die die Opferanode bildet, die innere Be - schichtung des Rohrs oder den "Innerliner" bildet.
